# EUROPÄISCHE PATENTSCHRIFT

(11) **EP 4 208 705 B1**
(45) Veröffentlichungstag und Bekanntmachung des Hinweises auf die Patenterteilung: **22.04.2026**
(21) Anmeldenummer: 21763390.8
(22) Anmeldetag: 31.08.2021
(51) Int. Cl.: G01M 13/025, G01M 15/02, F16D 3/76

(54) **KUPPLUNGSMODUL FÜR EINEN ANTRIEBSSTRANGPRÜFSTAND, ABTRIEBSMODUL UND ANTRIEBSSTRANGPRÜFSTAND**
COUPLING MODULE FOR A DRIVE TRAIN TEST STAND, OUTPUT MODULE, AND DRIVE TRAIN TEST STAND
MODULE D'ACCOUPLEMENT CONÇU POUR UN BANC D'ESSAI DE CHAÎNE CINÉMATIQUE, MODULE DE SORTIE ET BANC D'ESSAI DE CHAÎNE CINÉMATIQUE

(30) Priorität: 02.09.2020 DE 102020211025
(43) Veröffentlichungstag der Anmeldung: 12.07.2023
(73) Patentinhaber: ZF Friedrichshafen AG, 88046 Friedrichshafen (DE)
(72) Erfinder: HELL, Christian, 94107 Untergriesbach (DE)
(86) Internationale Anmeldenummer: PCT/EP2021/073943
(87) Internationale Veröffentlichungsnummer: WO 2022/049047

(56) Entgegenhaltungen:
- EP-A1- 2 602 602
- EP-A2- 0 249 989
- US-A- 1 802 148
- US-A1- 2010 040 833

## Beschreibung

Die Erfindung betrifft ein Kupplungsmodul für einen Antriebsstrangprüfstand zum Verbinden einer Gelenkwelle mit einer Antriebswelle gemäß dem Oberbegriff von Anspruch 1, ein entsprechendes Abtriebsmodul für einen Antriebsstrangprüfstand sowie einen entsprechenden Antriebsstrangprüfstand.

Antriebsstrangprüfstände zum Prüfen von Kraftfahrzeugantriebssträngen sind aus dem Stand der Technik bekannt. Derartige Antriebsstrangprüfstände werden üblicherweise verwendet, um Funktionsstörungen eines Antriebsstrangs bereits frühzeitig durch eine Reihe von Belastungstests zu erkennen. Typische Funktionsstörungen entstehen z.B. durch spielbehaftete Bauteile, wie z. B. Zahnräder, Synchronringe, Synchronkörper, Lamellenkupplungsscheiben und Wellen, die ausgelenkt oder zu Schwingungen angeregt werden können.

In diesem Zusammenhang beschreibt die DE 10 2012 018 359 A1 einen Fahrzyklus für eine Fahrsimulation, der von einem realen Kraftfahrzeug auf einem Rollenprüfstand durchfahren wird. Der Antrieb des Kraftfahrzeugs arbeitet dabei so, dass die Raddrehzahl des Kraftfahrzeugs der jeweiligen Geschwindigkeitsvorgabe des Fahrzyklusses entspricht, ohne dass sich das Kraftfahrzeug tatsächlich fortbewegt. Dies ermöglicht ein Prüfen des Kraftfahrzeugantriebsstrangs nach dem Einbau in das Kraftfahrzeug.

Die EP 2 602 602 A1 offenbart einen Fahrzeugprüfstand zur dynamischen Beanspruchung eines Fahrzeugs, wobei mindestens ein Aktuator vorhanden ist, der an mindestens einem Prüfrad des Fahrzeugs im Fahrbetrieb wirkende Prüflasten simuliert. Eine Beaufschlagungseinheit für das Prüfrad umfasst einen Wellenbereich und einen Trommelbereich. Im Trommelbereich ist das Prüfrad reibschlüssig gehalten. Hierzu ist ein auf eine Felge des Prüfrads aufgezogener Reifen durch Aufpumpen radial mit einer zylindrischen Innenfläche des Trommelbereichs verspannt.

Der Anmelderin sind weiterhin sog. Mehrlenker- Antriebsstrangprüfstände bekannt, welche drehfest mit den Radflanschen eines Kraftfahrzeugs verbindbar sind und den Radflanschen hinsichtlich ihrer Bewegungsmöglichkeiten sämtliche Freiheitsgrade gewährleisten, die auch für die Fahrzeugräder während des regulären Betriebs des Kraftfahrzeugs möglich sind. Die bekannten Mehrlenker- Antriebsstrangprüfstände bestehen dazu aus mehreren in Reihe angeordneten Hebeln und Drehgelenken, welche jeweils gegeneinander beweglich sind. Der Antriebsstrang des Kraftfahrzeugs wird dabei unmittelbar durch ein fahrzeugeigenes Antriebsaggregat angetrieben. Die Gelenkwellen des Antriebsstrangs sind die Radwellen, welche von den Mehrlenker-Kraftfahrzeuggetriebeprüfständen über die Radflansche mit vorgebbaren Bremsmomenten beaufschlagt werden können.

Die DE 43 28 537 C2 offenbart einen Getriebeprüfstand mit einem ersten, als Antriebsmotor dienenden Servomotor und einem zweiten, als Bremsmotor dienenden Servomotor. Der erste Antriebsmotor ist über eine Kupplung mit der Antriebswelle eines zu prüfenden Kraftfahrzeuggetriebes verbunden und wird hinsichtlich seiner Drehzahl über einen PC gesteuert, wobei beliebige Drehzahlverläufe simulierbar sind. Der Bremsmotor ist über eine weitere Kupplung mit einer Gelenkwelle des zu prüfenden Kraftfahrzeuggetriebes verbunden. Auch die Drehzahl des zweiten Motors wird über den PC gesteuert. Bei den vom PC simulierten Drehzahlverläufen handelt es sich um in realen Fahrversuchen gemessene Drehzahlverläufe. Somit kann das Kraftfahrzeuggetriebe gemäß der DE 43 28 537 C2 auch vor dem Einbau in ein Kraftfahrzeug geprüft werden.

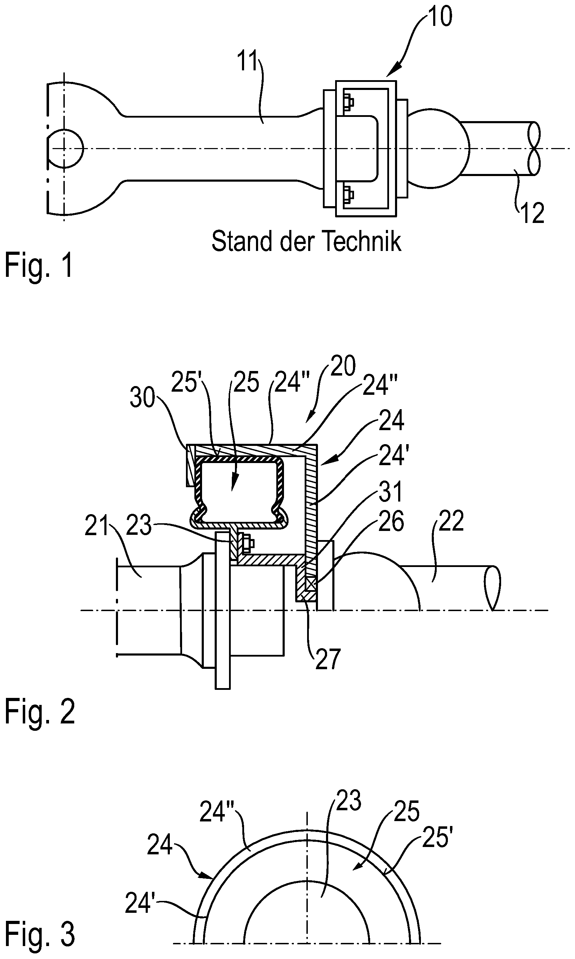

Fig. 1 zeigt ein im Stand der Technik bekanntes Radkorbmodul 10, welches eine Antriebsachse 11 mit einer Gelenkwelle 12 lösbar koppelt. Die Antriebsachse 11 wird von einem nicht dargestellten Antriebsmotor angetrieben und überträgt eine Drehzahl und ein Drehmoment über das Radkorbmodul auf die Gelenkwelle 12, welche von einem Bremsmotor mit einer Gegenkraft beaufschlagbar ist. Das Radkorbmodul ist dabei aus Stahl und analog zu einer herkömmlichen Radfelge über den Lochkranz der Radfelge mit der Antriebsachse verbunden.

Die bekannten Antriebsstrangprüfstände sind jedoch insofern nachteilbehaftet, als dass diese entweder überhaupt nicht für die Prüfung eines Kraftfahrzeugantriebsstrangs vor dem Einbau in ein Fahrzeug geeignet sind oder dass sie zumindest nicht in der Lage sind, insbesondere einen elektrisch angetriebenen Antriebsstrang vor dem Einbau in ein Fahrzeug dahingehend zuverlässig zu testen, weil das im Prüfstand gemessene Verhalten des elektrischen Antriebsstrangs einem später im Fahrzeug eingebauten Verhalten des Antriebsstrangs nicht entspricht. Der Grund für diese Abweichung des im Prüfstand gemessenen Verhaltens vom im Fahrzeug eingebauten Verhalten bei einem elektrisch angetriebenen Antriebsstrang liegt darin, dass der elektrische Antriebsmotor im Vergleich zu einem Verbrennungsmotor vergleichsweise hart und unelastisch in seinem Drehverhalten ist. Zudem befindet sich ein elektrischer Antriebsmotor oftmals direkt an der von ihm angetriebenen Achse, was zu vergleichsweise kurzen Triebwegen und damit zu einer weiteren Versteifung des Antriebsstrangs führt. Diese geringe Elastizität des elektrischen Antriebsstrangs kann im im Fahrzeug eingebauten Zustand jedoch zu einem großen Teil über die Gummibereifung des Fahrzeugs ausgeglichen werden, nicht jedoch im Antriebsstrangprüfstand.

Es ist eine Aufgabe der vorliegenden Erfindung, ein verbessertes Kupplungsmodul für einen Antriebsstrangprüfstand zum Verbinden einer Gelenkwelle mit einer Antriebswelle vorzuschlagen.

Diese Aufgabe wird erfindungsgemäß durch das Kupplungsmodul für einen Antriebsstrangprüfstand zum Verbinden einer Gelenkwelle mit einer Antriebswelle gemäß Anspruch 1 gelöst. Vorteilhafte Ausgestaltungen ergeben sich aus den Unteransprüchen.

Die Erfindung betrifft ein Kupplungsmodul für einen Antriebsstrangprüfstand zum Verbinden einer Gelenkwelle mit einer Antriebswelle, wobei das Kupplungsmodul eine Radfelge und einen Radtopf mit einer Bodenfläche und einer Seitenwand umfasst, wobei die Radfelge an der Antriebswelle drehfest anordbar ist und wobei der Radtopf an der Gelenkwelle drehfest anordbar ist. Das erfindungsgemäße Kupplungsmodul zeichnet sich dadurch aus, dass auf der Radfelge ein ringförmiges Dämpfungselement angeordnet ist, welches reibschlüssig in Anlage mit einer Innenseite der Seitenwand des Radtopfs steht.

Erfindungsgemäß ist also ein Kupplungsmodul vorgesehen, welches dazu geeignet ist, eine Antriebswelle eines Antriebsstrangprüfstands mit einer Gelenkwelle eines Antriebsstrangprüfstands trieblich zu verbinden. Die Antriebswelle stellt dabei eine Welle dar, welche von einem Antriebsmotor des Antriebstrangs oder des Antriebsstrangprüfstands antreibbar ist. Bei dem Antriebsmotor des Antriebstrangs oder des Antriebsstrangprüfstands handelt es sich bevorzugt um einen elektrischen Antriebsmotor. Insbesondere ist die Antriebswelle vom Antriebsmotor nicht unmittelbar, sondern mittelbar über eine Übersetzungsstufe bzw. ein schaltbares Getriebe antreibbar. Technisch gesehen kann die Antriebswelle im Sinne der Erfindung somit auch die Gelenkwelle der Übersetzungsstufe bzw. des Getriebes sein.

Die Antriebswelle mitsamt dem sie antreibenden Antriebsmotor kann dabei vorteilhaft als für den Einbau in ein Fahrzeug vorgesehener Antriebsstrang ausgebildet sein, d.h., es handelt sich bei der Antriebswelle beispielsweise um eine angetriebene Starrachse, eine angetriebene Lenkachse oder auch einen Einzelradantrieb, welche nach dem Prüfvorgang in ein entsprechendes Fahrzeug eingebaut werden. Bei dem Fahrzeug kann es sich beispielsweise um einen PKW, einen LKW, ein Nutzfahrzeug oder auch eine Bau- oder Arbeitsmaschine handeln.

Das Kupplungsmodul umfasst eine Radfelge, die insbesondere als herkömmliche Radfelge zur Verwendung an einem Kraftfahrzeug ausgebildet sein kann. Weiterhin umfasst das Kupplungsmodul einen Radtopf, wobei der Radtopf eine Bodenfläche und eine Seitenwand aufweist. Der Radtopf ist dabei vorteilhaft als Hohlzylinder ausgebildet, wobei die Bodenfläche eine Grundfläche des Hohlzylinders darstellt und die Seitenfläche die Mantelfläche des Hohlzylinders darstellt. Der Radtopf besteht bevorzugt aus Stahl.

Über die Radfelge kann das Kupplungsmodul mit der Antriebswelle drehfest verbunden werden, insbesondere über einen Lochkranz der Radfelge. Somit kann das Kupplungsmodul also wie eine gewöhnliche Radfelge mit der Antriebswelle des Antriebsstrangs verbunden werden.

Über den Radtopf kann das Kupplungsmodul mit der Gelenkwelle ebenfalls drehfest verbunden werden, insbesondere über eine Flanschverbindung. Die Gelenkwelle wird vorteilhaft von einem elektrischen Belastungsmotor angetrieben, welcher Bremsmomente in den Antriebsstrang einbringen kann, die den Antriebsmomenten des Antriebsmotors entgegengerichtet sind. Dadurch kann eine dynamische Belastung des Antriebsstrangs simuliert werden.

Das erfindungsgemäße Kupplungsmodul zeichnet sich nun dadurch aus, dass auf der Radfelge ein ringförmiges Dämpfungselement angeordnet ist, welches insbesondere mit seinem radialen Außenumfang reibschlüssig in Anlage mit einer Innenseite der Seitenwand des Radtopfs steht. Somit kann ein Drehmoment von der Antriebswelle über die Radfelge und das Dämpfungselement auf die Seitenwand des Radtopfs und damit auf die Gelenkwelle übertragen werden.

Das ringförmige Dämpfungselement empfindet dabei die torsionsschwingungsdämpfenden Eigenschaften eines tatsächlichen Fahrzeugreifens nach und wird insbesondere wie ein Fahrzeugreifen auf der Radfelge montiert.

Vorteilhaft weist das Dämpfungselement an seinem radialen Außenumfang eine profilierte Lauffläche wie ein tatsächlicher fahrzeugreifen auf.

Das Dämpfungselement kann beispielsweise aus einem dämpfenden Elastomer oder aus einem Reifengummi hergestellt sein. Weiterhin kann das Dämpfungselement als aufblasbarer Hohlkörper oder massiv ausgebildet sein

Daraus ergibt sich der Vorteil, dass das erfindungsgemäße Kupplungsmodul eine Elastizität des Antriebsstrangs im Antriebsstrangprüfstand gewährleistet, die der tatsächlichen Elastizität des Antriebsstrangs im im Fahrzeug eingebauten Zustand entspricht. Indem das Drehmoment des Antriebsmotors nämlich über eine Radfelge und das Dämpfungselement übertragen wird, macht sich die Erfindung die Erkenntnis zu Nutze, dass das tatsächliche Verhalten des Antriebsstrangs im im Fahrzeug eingebauten Zustand maßgeblich durch die Elastizität des aus Gummi bestehenden Fahrzeugreifens geprägt ist. Somit kann durch das erfindungsgemäße Kupplungsmodul eine deutlich realitätsnähere Prüfung des Antriebsstrangs als bisher im Stand der Technik üblich erfolgen. Die Erfindung versucht also nicht nur, wie im Stand der Technik oftmals üblich, ein bestimmtes Verhalten des Antriebsstrangs zu simulieren, sondern adaptiert die maßgeblich das Verhalten des Antriebsstrangs im tatsächlich im Fahrzeug eingebauten Zustand prägenden Charakteristika.

Bevorzugt ist es vorgesehen, dass die Innenseite der Seitenwand des Radtopfs eine Beschichtung aufweist, welche den Reibkoeffizienten des Dämpfungselements auf der Innenseite erhöht. Somit kann auch bei hohen Drehmomenten ein Durchdrehen des Dämpfungselements im Radtopf vermieden werden.

Besonders bevorzugt ist die Beschichtung eine Asphalt-Beschichtung. Dies ermöglicht ein weitestgehend realistisches Verhalten des Dämpfungselements im Radtopf.

Gemäß einer weiteren bevorzugten Ausführungsform der Erfindung ist es vorgesehen, dass das Dämpfungselement als Fahrzeugreifen ausgebildet ist, welcher mit seiner Lauffläche reibschlüssig in Anlage mit einer Innenseite der Seitenwand des Radtopfs steht. Indem das Dämpfungselement als Fahrzeugreifen ausgebildet ist, kann ein vollständig realitätsgetreues Verhalten des Antriebsstrangs während des Prüfvorgangs hergestellt werden.

Vorteilhaft ist es vorgesehen, dass der Fahrzeugreifen erst dann mit Druckluft befüllt wird, nachdem er im Radtopf angeordnet wurde. Wenn der Fahrzeugreifen erst nach seiner Anordnung im Radtopf mit Druckluft befüllt wird, dehnt er sich radial aus und gelangt dadurch in Anlage mit der Seitenwand. Dies begünstigt auch ein einfaches Anordnen des Fahrzeugreifens im Radtopf.

Gemäß einer weiteren bevorzugten Ausführungsform der Erfindung ist es vorgesehen, dass der Radtopf einen Stützring aufweist, welcher an einem der Bodenfläche des Radtopfs gegenüberliegenden Ende der Seitenwand des Radtopfs angeordnet ist. Somit ist das Dämpfungselement bzw. der Fahrzeugreifen also nicht nur radial durch die Innenseite der Seitenwand des Radtopfs eingefasst sowie von einer ersten Axialseite durch die Bodenfläche eingfasst, sondern darüber hinaus auch von einer zweiten Axialseite durch den Stützring eingefasst. Daraus ergibt sich der Vorteil, dass die Seitenwand auch an dem der Bodebfläche gegenüberliegenden Axialende stabilisiert wird und beide Axialenden insbesondere gegen ein radiales Aufbiegen, beispielsweise infolge einer Druckluftbefüllung des Fahrzeugreifens und einer daraus resultierenden Ausdehnung, gesichert sind. Der Stützring sichert also die Seitenwand gegen eine ungewollte Deformation und gewährleistet damit auch einen größeren möglichen Anpressdruck des Dämpfungselements bzw. der Lauffläche des Fahrzeugreifens gegen die Seitenwand, da die Seitenwand dem Anpressdruck des Fahrzeugreifens nicht elastisch nachgeben kann.

Der Stützring kann die zweite Axialseite des Dämpfungselements bzw. des Fahrzeugreifens entweder nur anteilig einfassen oder auch vollständig einfassen. Bei einer nur anteiligen Einfassung ist der Stützring bevorzugt im radial äußeren Bereich des Dämpfungselements bzw. des Fahrzeugreifens angeordnet und an der Seitenwand des Kupplungsmoduls befestigt.

Gemäß einer besonders bevorzugten Ausführungsform der Erfindung ist es vorgesehen, dass der Stützring lösbar am Radtopf angeordnet ist. Daraus ergibt sich der Vorteil, dass eine Montage bzw. Demontage des Fahrzeugreifens durch den Stützring nicht erschwert wird.

Gemäß einer weiteren besonders bevorzugten Ausführungsform der Erfindung ist es vorgesehen, dass der Stützring an seinem Innenumfang über ein Stützlager mit der Radfelge verbunden ist. Daraus ergibt sich der Vorteil, dass über das Stützlager die Stabilität des Kupplungsmoduls insbesondere bei hohen Drehzahlen bzw. hochdynamischen Prüfverfahren erhöht werden kann.

Sofern das Kupplungsmodul über das zusätzliche Stützlager verfügt, so wird vorzugsweise keine gewöhnliche Radfelge verwendet, sondern stattdessen eine Sonderfelge, welche eine entsprechende Lagerfläche zum Abstützen des Stützlagers aufweist

Gemäß einer weiteren bevorzugten Ausführungsform der Erfindung ist es vorgesehen, dass in der Bodenfläche eine Zentrierlagerung zur Zentrierung des Radtopfs auf der Radfelge angeordnet ist. Die Radfelge kann dazu beispielsweise einen radial mittigen Vorsprung aufweisen, auf welchem die Zentrierlagerung abgestützt sein kann. Die Zentrierlagerung verbessert die Zentriergenauigkeit der Gelenkwelle gegenüber der Antriebswelle und verringert damit eine Unwucht des Kupplungsmoduls insbesondere bei hohen Drehzahlen und hochdynamischen Prüfverfahren.

Zum Abstützen der Zentrierlagerung am antriebsseitigen Teil des Kupplungsmoduls kann bevorzugt ein Adapterstück verwendet werden, welches insbesondere zylinderförmig ausgebildet ist und ein offenes und ein geschlossenes Axialende aufweist. Am offenen Axialende ist bevorzugt ein Lochkranz vorgesehen, welcher mittels Verschraubens eine drehfeste Anordnung des Adapterstücks am Lochkranz der Radfelge ermöglicht. Beispielsweise kann das Adapterstück gemeinsam mit der Radfelge an der Antriebswelle angeordnet werden, so dass der Lochkranz der Radfelge und der Lochkranz des Adapterstücke deckungsgleich über dem Lochkranz der Antriebswelle angeordnet sind und sowohl die Radfelge als auch das Adapterstück von denselben Schrauben gehalten werden, welche die Radfelge und das Adapterstück durchragen und in die Antriebswelle eingreifen. Am geschlossenen Axialende ist bevorzugt ein Vorsprung vorgesehen, welcher eine Anordnung der Zentrierlagerung begünstigt.

Gemäß einer weiteren bevorzugten Ausführungsform der Erfindung ist es vorgesehen, dass die Bodenfläche als Gitterfläche oder als Segmentfläche mit Bügelarmen ausgebildet ist. Das heißt also, dass die Bodenfläche nicht als massive "Platte" ausgebildet ist, sondern vielmehr mit Zwischenräumen bzw. Zwischenflächen, die materialfrei sind, ausgebildet sein kann. Die Anzahl der Bügelarme kann dabei bedarfsweise und in Abhängigkeit einer Materialstärke bzw. Drehmomentübertragungsfähigkeit gewählt werden, ebenso kann die Gitterstärke entsprechend gewählt werden. Die Bügelarme stellen dabei Verbindungsstreben dar, welche die Seitenwand des Radtopfs mit einer Verbindungsstelle für die Gelenkwelle verbinden und so das vom Reifen auf die Seitenwand übertragene Drehmoment an die Gelenkwelle weiterleiten. Ebenso leitet die Gitterfläche das vom Reifen auf die Seitenwand übertragene Drehmoment an die Gelenkwelle weiter. Durch die Ausbildung als Gitterfläche oder als Segmentfläche mit Bügelarmen ergibt sich der Vorteil, dass Material eingespart werden kann, wodurch das erfindungsgemäße Kupplungsmodul leichter und kostengünstiger wird und insbesondere ein geringeres Trägheitsmoment aufweist. Zudem ist der Fahrzeugreifen auch von der Seite der Bodenfläche aus zugänglich.

Gemäß einer weiteren bevorzugten Ausführungsform der Erfindung ist es vorgesehen, dass die Seitenwand als spannbare Seitenwand ausgebildet ist. Unter einer spannbaren Seitenwand wird eine Seitenwand verstanden, deren Umfang mechanisch änderbar ist, so dass sie um die Lauffläche des Fahrzeugreifens gespannt werden kann. Die ermöglicht einerseits eine vergleichsweise einfache Montage des Dämpfungselements bzw. des Fahrzeugreifens im Kupplungsmodul und andererseits ein zuverlässiges Einspannen des Fahrzeugreifens im Kupplungsmodul für den Prüfbetrieb. Insbesondere muss der Fahrzeugreifen nämlich nicht durch Aufblasen des Fahrzeugreifens mit der Seitenwand in Anlage gebracht werden, womit auch ein bereits vollständig aufgeblasener Fahrzeugreifen montiert werden kann. Zudem kann der Reibschluss zwischen der Innenfläche der Seitenwand und der Lauffläche des Fahrzeugreifens auf diese Weise vergrößert werden, da der Anpressdruck größer sein kann. Somit können auch größere Drehmomente übertragen werden.

Erfindungsgemäß ist es vorgesehen, dass die Innenseite der Seitenwand mindestens ein Latschsegment aufweist. Unter einem Latschsegment wird dabei eine Abweichung von der Kreisform in Form einer ein Segment bildenden Kreissehne verstanden, auf welche das Dämpfungselement bzw. der Fahrzeugreifen mit seiner Lauffläche aufsetzt und einen sog. Latsch bildet. Da im realen Betrieb des Fahrzeugreifens am Kraftfahrzeug der Kraftübertrag vom Fahrzeugreifen auf die Straße ausschließlich über den Latsch erfolgt, kann durch das Latschsegment somit ein besonders realitätsnahes Prüfverhalten und Kraftübertragungsverhalten durch das Kupplungsmodul erzeugt werden. Ggf. können auch mehrere Latschsegmente vorgesehen sein, wodurch sich beispielsweise die Steifigkeit hinsichtlich des Drehmomentübertragungsverhaltens des Kupplungsmoduls erhöhen lässt. Im Allgemeinen gilt dabei, dass die Steifigkeit zunimmt, je mehr Latschsegmente vorgesehen sind.

Gemäß einer weiteren bevorzugten Ausführungsform der Erfindung ist es vorgesehen, dass das Dämpfungselement oder die Lauffläche des Fahrzeugreifens ausschließlich mit dem mindestens einen Latschsegment in Anlage steht. Somit kann ein vollständig realistisches Drehmomentübertragungsverhaltens des Kupplungsmoduls erzeugt werden.

Die Erfindung betrifft weiterhin ein Abtriebsmodul für einen Antriebsstrangprüfstand, umfassend einen elektrischen Belastungsmotor und ein erfindungsgemäßes Kupplungsmodul. Dies führt zu den bereits im Zusammenhang mit dem erfindungsgemäßen Kupplungsmodul beschriebenen Vorteilen auch für das erfindungsgemäße Abtriebsmodul.

Schließlich betrifft die Erfindung auch einen Antriebsstrangprüfstand zum Prüfen eines Fahrzeugantriebsstrangs, umfassend mindestens ein erfindungsgemäßes Abtriebsmodul. Dies führt zu den bereits genannten Vorteilen.

Nachfolgend wird die Erfindung anhand von in den Figuren dargestellten Ausführungsformen beispielhaft erläutert.

Es zeigen:
- Fig. 1: ein im Stand der Technik bekanntes Radkorbmodul,
- Fig. 2: beispielhaft und schematisch einen möglichen Aufbau eines erfindungsgemäßen Kupplungsmoduls zum Verbinden einer Gelenkwelle mit einer Antriebswelle,
- Fig. 3: einen Querschnitt durch das Kupplungsmodul der Fig. 2.,
- Fig. 4: den Querschnitt durch das Kupplungsmodul der Fig. 2 mit einem Latschsegment und
- Fig. 5: beispielhaft und schematisch einen weiteren möglichen Aufbau eines erfindungsgemäßen Kupplungsmoduls zum Verbinden einer Gelenkwelle mit einer Antriebswelle.

Gleiche Gegenstände, Funktionseinheiten und vergleichbare Komponenten sind figurenübergreifend mit den gleichen Bezugszeichen bezeichnet. Diese Gegenstände, Funktionseinheiten und vergleichbaren Komponenten sind hinsichtlich ihrer technischen Merkmale identisch ausgeführt, sofern sich aus der Beschreibung nicht explizit oder implizit etwas anderes ergibt.

Fig. 1 zeigt ein im Stand der Technik bekanntes Radkorbmodul 10, welches eine Antriebsachse 11 mit einer Gelenkwelle 12 lösbar verbindet.

Fig. 2 zeigt beispielhaft und schematisch einen möglichen Aufbau eines erfindungsgemäßen Kupplungsmoduls 20 zum Verbinden einer Gelenkwelle 22 mit einer Antriebswelle 21. Die Antriebswelle 21 wird beispielsgemäß durch einen (in Fig. 2 nicht dargestellten) Elektromotor angetrieben, welcher direkt auf der Antriebswelle 21 angeordnet ist und der Antriebswelle 21 fest zugeordnet ist, d.h. der die Antriebswelle 21 auch im realen Fahrbetrieb im Kraftfahrzeug tatsächlich antreibt. Das Kupplungsmodul 20 umfasst eine Radfelge 23, bei der es sich um eine herkömmliche Radfelge 23 handelt, wie sie auch an Kraftfahrzeugen im Straßenverkehr montierbar ist. Das Kupplungsmodul 20 umfasst weiterhin einen Radtopf 24, mit einer Bodenfläche 24' und einer Seitenwand 24". Vom Radtopf 24 eingefasst ist ein als Fahrzeugreifen 25 ausgebildetes Dämpfungselement 25, welcher auf der Radfelge 23 angeordnet ist und mit seiner Lauffläche 25' reibschlüssig in Anlage mit einer Innenseite 24‴ der Seitenwand 24" des Radtopfs 24 steht. Daraus ergeben sich hinsichtlich des Drehmomentübertragungsverhaltens des Kupplungsmoduls 20 sehr realitätsnahe Eigenschaften, da wie im realen Fahrbetrieb die Elastizität des Fahrzeugreifens 25 ausgenutzt wird. Das Drehmoment wird dabei von der Antriebswelle 21 zunächst auf die Radfelge 23 übertragen und dann von der Radfelge 23 auf den Fahrzeugreifen 24 übertragen. Der Fahrzeugreifen 24 überträgt das Drehmoment nach Maßgabe seiner elastischen Eigenschaften über seine Lauffläche 25' auf die Innenseite 24‴ der Seitenwand 24" des Radtopfs 24. Der Radtopf 24 wiederum überträgt das Drehmoment über seine Bodenfläche 24' auf die Gelenkwelle 22.

Das beispielhafte Kupplungsmodul 20 der Fig. 2 umfasst weiterhin ein Stützring 30, welcher mittels einer Schraubverbindung lösbar an einem der Bodenfläche 24' des Radtopfs 24 gegenüberliegenden Ende der Seitenwand 24" des Radtopfs 24 angeordnet ist. Durch den Stützring 30 kann ein elastisches Nachgeben im Sinne eines radialen Aufbiegens der Seitenwand 24" am dem Stützring 30 zugewandten axialen Ende der Seitenwand 24" verhindert werden.

Schließlich umfasst das Kupplungsmodul 20 der Fig. 2 auch eine Zentrierlagerung 26 zur Zentrierung des Radtopfs 24 auf der Radfelge 23. Das Kupplungsmodul 20 ist dabei über seine Bodenfläche 24' auf einem Vorsprung 27 eines Adapterstücks 31 gelagert, welches mittels einer Schraubverbindung über den Lochkranz mit der Radfelge 23 verbunden ist. Die Zentrierlagerung 26 verbessert die Gleichförmigkeit des Kupplungsmoduls 20 insbesondere bei hohen Drehzahlen und hochdynamischen Prüfverfahren.

Fig. 3 zeigt einen Querschnitt durch das Kupplungsmodul 20 der Fig. 2. Dabei zu sehen ist die Seitenwand 24" mit der Innenseite 24‴ des Radtopfs 24. Im Radtopf 24 ist der Fahrzeugreifen 25 mit seiner Lauffläche 25' angeordnet, wobei die Lauffläche 25' reibschlüssig an die Innenseite 24" anliegt, so dass eine Drehmomentübertragung möglich ist. Der Fahrzeugreifen 25 ist auf der Radfelge 23 angeordnet.

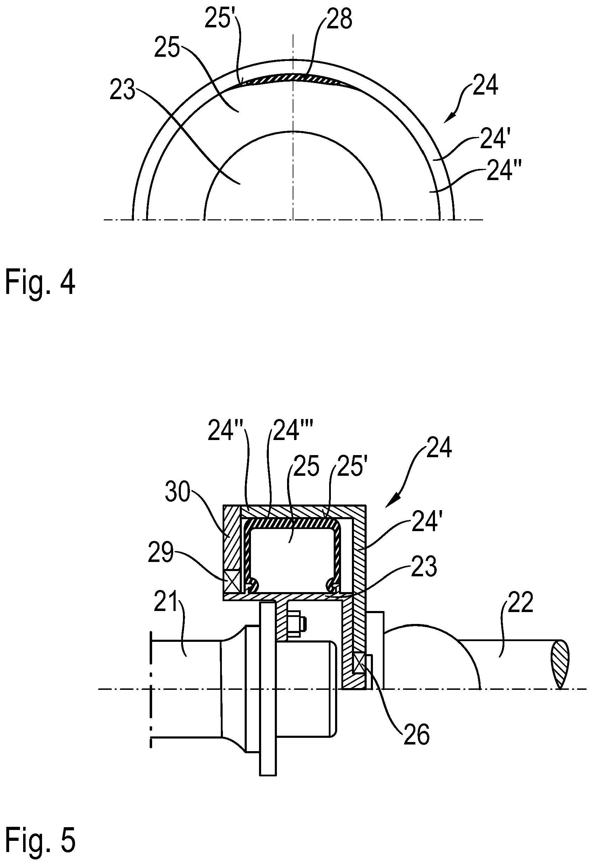

Fig. 4 zeigt den Querschnitt der Fig. 3, allerdings weist die Innenseite 24" der Seitenwand 24' beispielsgemäß ein Latschsegment 28 auf. Das Latschsegment 28 führt dazu, dass der Fahrzeugreifen 25 im eingespannten Zustand im Radtopf 24 wie im realen Fahrbetrieb am Kraftfahrzeug einen Latsch ausbildet, über den das vollständige Drehmoment übertragen wird. Beispielsgemäß besteht in Fig. 4 abseits des Latschsegments 28 ein Luftspalt zwischen der Lauffläche 25' des Fahrzeugreifens 25 und der Innenseite 24" der Seitenwand 24'.

Fig. 5 zeigt beispielhaft und schematisch einen weiteren möglichen Aufbau eines erfindungsgemäßen Kupplungsmoduls 20 zum Verbinden einer Gelenkwelle 22 mit einer Antriebswelle 21. Das Kupplungsmodul 20 der Fig. 5 unterscheidet sich vom Kupplungsmodul 20 der Fig. 2 nur dadurch, dass anstelle einer herkömmlichen Radfelge 23 eine sonderangefertigte Radfelge 23 verwendet wird, welche das Vorsehen eines Stützlagers 29 erlaubt. Daraus ergibt sich der Vorteil, dass über das Stützlager 29 die Stabilität des Kupplungsmoduls 20 insbesondere bei hohen Drehzahlen bzw. hochdynamischen Prüfverfahren erhöht werden kann. Der Stützring 30 ist entsprechend weit nach radial innen verlängert, um an das Stützlager 29 anzugreifen.

### Bezugszeichen

- 10: Radkorbmodul
- 11: Antriebsachse
- 12: Gelenkwelle
- 20: Kupplungsmodul
- 21: Antriebswelle
- 22: Gelenkwelle
- 23: Radfelge
- 24: Radtopf
- 24': Bodenfläche
- 24": Seitenwand
- 24‴: Innenseite
- 25: Dämpfungselement, Fahrzeugreifen
- 25': Lauffläche
- 26: Zentrierlagerung
- 27: Vorsprung
- 28: Latschsegment
- 29: Stützlager
- 30: Stützring
- 31: Adapterstück

## Patentansprüche

1. Kupplungsmodul (20) für einen Antriebsstrangprüfstand zum Verbinden einer Gelenkwelle (22) mit einer Antriebswelle (21),
wobei das Kupplungsmodul (20) eine Radfelge (23) und einen Radtopf (24) mit einer Bodenfläche (24') und einer Seitenwand (24‴) umfasst,
wobei die Radfelge (23) an der Antriebswelle (21) drehfest anordbar ist,
wobei der Radtopf (24) an der Gelenkwelle (22) drehfest anordbar ist und
wobei auf der Radfelge (23) ein ringförmiges Dämpfungselement (25) angeordnet ist, welches reibschlüssig in Anlage mit einer Innenseite (24‴) der Seitenwand (24") des Radtopfs (24) steht
**dadurch gekennzeichnet, dass** die Innenseite (24‴) der Seitenwand (24") mindestens ein Latschsegment (28) aufweist.

2. Kupplungsmodul (20) nach Anspruch 1,
**dadurch gekennzeichnet, dass** das Dämpfungselement (25) als Fahrzeugreifen (25) ausgebildet ist, welcher mit seiner Lauffläche (25') reibschlüssig in Anlage mit einer Innenseite (24‴) der Seitenwand (24") des Radtopfs (24) steht.

3. Kupplungsmodul (20) nach mindestens einem der Ansprüche 1 und 2,
**dadurch gekennzeichnet, dass** der Radtopf (24) einen Stützring (30) aufweist, welcher an einem der Bodenfläche (24') des Radtopfs (24) gegenüberliegenden Ende der Seitenwand (24") des Radtopfs (24) angeordnet ist.

4. Kupplungsmodul (20) nach Anspruch 3,
**dadurch gekennzeichnet, dass** der Stützring (30) lösbar am Radtopf (24) angeordnet ist.

5. Kupplungsmodul (20) nach mindestens einem der Ansprüche 3 und 4,
**dadurch gekennzeichnet, dass** der Stützring (30) an seinem Innenumfang über ein Stützlager (29) mit der Radfelge (23) verbunden ist.

6. Kupplungsmodul (20) nach mindestens einem der Ansprüche 1 bis 5,
**dadurch gekennzeichnet, dass** in der Bodenfläche (24') eine Zentrierlagerung (26) zur Zentrierung des Radtopfs (24) auf der Radfelge (23) angeordnet ist.

7. Kupplungsmodul (20) nach mindestens einem der Ansprüche 1 bis 6,
**dadurch gekennzeichnet, dass** die Bodenfläche (24') als Gitterfläche oder als Segmentfläche mit Bügelarmen ausgebildet ist.

8. Kupplungsmodul (20) nach mindestens einem der Ansprüche 1 bis 7,
**dadurch gekennzeichnet, dass** die Seitenwand (24") als spannbare Seitenwand (24") ausgebildet ist.

9. Kupplungsmodul (20) nach Anspruch 1,
**dadurch gekennzeichnet, dass** das Dämpfungselement (25) oder die Lauffläche (25') des Fahrzeugreifen (25) ausschließlich mit dem mindestens einen Latschsegment (28) in Anlage steht.

10. Abtriebsmodul für einen Antriebsstrangprüfstand, umfassend einen elektrischen Belastungsmotor und ein Kupplungsmodul (20) nach mindestens einem der Ansprüche 1 bis9.

11. Antriebsstrangprüfstand zum Prüfen eines Fahrzeugantriebsstrangs, umfassend mindestens ein Abtriebsmodul nach Anspruch 10.

## Claims

1. Coupling module (20) for a drive train test stand for connecting an articulated shaft (22) to a drive shaft (21),
wherein the coupling module (20) comprises a wheel rim (23) and a wheel cap (24) having a base face (24') and a side wall (24‴),
wherein the wheel rim (23) can be arranged in a rotationally secure manner on the drive shaft (21), wherein the wheel cap (24) can be arranged in a rotationally secure manner on the articulated shaft (22), and
wherein there is arranged on the wheel rim (23) an annular damping element (25) which is in frictionally engaging abutment with an inner side (24‴) of the side wall (24") of the wheel cap (24),
**characterized in that** the inner side (24‴) of the side wall (24") has at least one latch segment (28).

2. Coupling module (20) according to Claim 1,
**characterized in that** the damping element (25) is in the form of a vehicle tyre (25) which is in frictionally engaging abutment with the running face (25') thereof with an inner side (24‴) of the side wall (24") of the wheel cap (24).

3. Coupling module (20) according to at least one of Claims 1 and 2,
**characterized in that** the wheel cap (24) has a support ring (30) which is arranged at an end, opposite the base face (24') of the wheel cap (24), of the side wall (24") of the wheel cap (24).

4. Coupling module (20) according to Claim 3,
**characterized in that** the support ring (30) is releasably arranged on the wheel cap (24).

5. Coupling module (20) according to at least one of Claims 3 and 4,
**characterized in that** the support ring (30) is connected to the wheel rim (23) at the inner circumference thereof by means of a support bearing (29).

6. Coupling module (20) according to at least one of Claims 1 to 5,
**characterized in that** a centring bearing (26) for centring the wheel cap (24) on the wheel rim (23) is arranged in the base face (24').

7. Coupling module (20) according to at least one of Claims 1 to 6,
**characterized in that** the base face (24') is in the form of a grid face or a segment face having bracket arms.

8. Coupling module (20) according to at least one of Claims 1 to 7,
**characterized in that** the side wall (24") is in the form of a clampable side wall (24").

9. Coupling module (20) according to Claim 1,
**characterized in that** the damping element (25) or the running face (25') of the vehicle tyre (25) is exclusively in abutment with the at least one latch segment (28).

10. Output module for a drive train test stand, comprising an electric loading motor and a coupling module (20) according to at least one of Claims 1 to 9.

11. Drive train test stand for testing a vehicle drive train, comprising at least one output module according to Claim 10.

## Revendications

1. Module d'accouplement (20) pour un banc d'essai de chaîne cinématique destiné à relier un arbre articulé (22) à un arbre d'entraînement (21),
le module d'accouplement (20) comprenant une jante (23) de roue et un enjoliveur (24) de roue avec une surface de base (24') et une paroi latérale (24‴),
la jante (23) de roue pouvant être disposée de manière solidaire en rotation sur l'arbre d'entraînement (21), l'enjoliveur (24) de roue pouvant être disposé de manière solidaire en rotation sur l'arbre articulé (22) et
un élément d'amortissement (25) annulaire étant disposé sur la jante (23) de roue, lequel est en appui par friction avec un côté intérieur (24‴) de la paroi latérale (24") de l'enjoliveur (24) de roue, **caractérisé en ce que** le côté intérieur (24‴) de la paroi latérale (24") comporte au moins un segment de zone de contact (28).

2. Module d'accouplement (20) selon la revendication 1,
**caractérisé en ce que** l'élément d'amortissement (25) est formé comme un pneu (25) de véhicule qui est en appui par friction, par sa surface de roulement (25'), avec un côté intérieur (24‴) de la paroi latérale (25") de l'enjoliveur (24) de roue.

3. Module d'accouplement (20) selon au moins l'une des revendications 1 et 2,
**caractérisé en ce que** l'enjoliveur (24) de roue comporte une bague d'appui (30), qui est disposée sur une extrémité, faisant face à la surface de base (24') de l'enjoliveur (24) de roue, de la paroi latérale (24") de l'enjoliveur (24) de roue.

4. Module d'accouplement (20) selon la revendication 3,
**caractérisé en ce que** la bague d'appui (30) est disposée de manière amovible sur l'enjoliveur (24) de roue.

5. Module d'accouplement (20) selon au moins l'une des revendications 3 et 4,
**caractérisé en ce que** la bague d'appui (30) est reliée à la jante (23) de roue sur sa périphérie intérieure par un palier d'appui (29).

6. Module d'accouplement (20) selon au moins l'une des revendications 1 à 5,
**caractérisé en ce qu'**un support de centrage (26) pour centrer l'enjoliveur (24) de roue est disposé sur la jante (23) de roue dans la surface de base (24').

7. Module d'accouplement (20) selon au moins l'une des revendications 1 à 6,
**caractérisé en ce que** la surface de base (24') est formée comme une surface de grille ou comme une surface de segment avec des bras d'étrier.

8. Module d'accouplement (20) selon au moins l'une des revendications 1 à 7,
**caractérisé en ce que** la paroi latérale (24") est formée comme une paroi latérale (24") pouvant être serrée.

9. Module d'accouplement (20) selon la revendication 1,
**caractérisé en ce que** l'élément d'amortissement (25) ou la surface de roulement (25') du pneu (25) de véhicule est en appui exclusivement avec l'au moins un segment de zone de contact (28).

10. Module de sortie pour un banc d'essai de chaîne cinématique, comprenant un moteur de charge électrique et un module d'accouplement (20) selon au moins l'une des revendications 1 à 9.

11. Banc d'essai de chaîne cinématique destiné à tester une chaîne cinématique de véhicule, comprenant au moins un module de sortie selon la revendication 10.
